# EUROPEAN PATENT APPLICATION

(11) **EP 4 624 788 A1**
(43) Date of publication of application: **01.10.2025**
(21) Application number: 23902086.0
(22) Date of filing: 30.06.2023
(51) Int. Cl.: F16L 5/14, F16L 5/02, F16L 5/00, B60R 16/02, H02G 3/22, H01B 17/30, H02G 15/013, H02G 15/04

(54) **PIPELINE VIA HOLE SEALING DEVICE AND VEHICLE**

(30) Priority: 16.12.2022 CN 202223412152 U
(71) Applicant: BYD Company Limited, Shenzhen, Guangdong 518118 (CN)
(72) Inventor: CHEN, Lingying, Shenzhen, Guangdong 518118 (CN); SUN, Xing, Shenzhen, Guangdong 518118 (CN); HUANG, Fengshou, Shenzhen, Guangdong 518118 (CN); YUAN, Ye, Shenzhen, Guangdong 518118 (CN)
(74) Representative: Taor, Simon Edward William
(86) International application number: PCT/CN2023/104914
(87) International publication number: WO 2024/124876

(57) **Abstract**

A pipeline via hole sealing device (100) and a vehicle. The pipeline via hole sealing device (100) comprises a pipeline holder (10) and a plurality of pipeline fixing members (20), wherein a first pipeline penetration hole (13) are disposed at a bottom of the pipeline holder (10), the pipeline holder (10) being adapted for being arranged on a supporting face, and the first pipeline penetration hole (13) being adapted for penetrations of pipelines (50); the plurality of pipeline fixing members (20) are arranged in the pipeline holder (10), and a plurality of second pipeline penetration holes (21) arranged at intervals are formed between the plurality of pipeline fixing members (20); and the plurality of second pipeline penetration holes (21) are arranged opposite the first pipeline penetration hole (13) in the extension direction of the pipelines (50).

## Description

### CROSS-REFERENCE TO RELATED APPLICATIONS

The present disclosure claims priority to and benefits of Chinese Patent Application No. 202223412152.1, filed on December 16, 2022 and entitled "PIPELINE VIA HOLE SEALING DEVICE AND VEHICLE". The entire content of the above-referenced application is incorporated herein by reference.

### FIELD

The present disclosure relates to the field of vehicle technologies, and specifically, to a pipeline via hole sealing device and a vehicle.

### BACKGROUND

In the related art, sealing with a glue is directly performed after all pipelines are led out from a large through hole. The sealing glue sags on the through hole and pipelines if no supporting surface for gluing exists. In this way, a gluing thickness and a gluing state are uncontrollable, leading to problems such as insufficient gluing and a gluing cavity. All the pipelines are fixed to the through hole only by gluing. Therefore, after a vehicle runs a vibration durability condition, shaking pipelines pull the sealing glue, causing cracking of the sealing glue and leakage.

### SUMMARY

The present disclosure aims to resolve at least one of technical problems in the related art. Accordingly, an objective of the present disclosure is to provide a pipeline via hole sealing device. The pipeline via hole sealing device can prevent pipelines from being clumped, worn, and cracked, and can also prevent poor gluing.

The present disclosure further provides a vehicle.

According to an embodiment of a first aspect of the present disclosure, the pipeline via hole sealing device includes a pipeline holder and multiple pipeline fixing members. A bottom of the pipeline holder is provided with a first pipeline penetration hole. The pipeline holder is configured to be arranged on a supporting surface, and the first pipeline penetration hole is configured to be penetrated by pipelines. The multiple pipeline fixing members are arranged in the pipeline holder. Multiple second pipeline penetration holes are arranged at intervals between the multiple pipeline fixing members. The multiple second pipeline penetration holes and the first pipeline penetration hole are oppositely arranged along an extension direction of the pipelines.

Therefore, the pipeline holder and the multiple pipeline fixing members arranged in the pipeline via hole sealing device can fix the pipelines, can prevent the pipelines from being clumped, worn, and cracked, and can also avoid poor gluing. The multiple pipeline fixing members have a simple structure to be conveniently mounted and replaced. In this way, stability of sealing can be improved, efficiency of assembling is high, ineffective sealing can be avoided, and leakage from a hole of a roof pipeline can also be avoided.

According to some embodiments of the present disclosure, one side of each of the pipeline fixing members is provided with a sub-pipeline penetration hole. Sub-pipeline penetration holes on two adjacent pipeline fixing members are oppositely arranged to form the second pipeline penetration hole.

According to some embodiments of the present disclosure, the multiple pipeline fixing members are successively arranged along a circumferential direction. Two sides of the pipeline fixing member are respectively provided with the sub-pipeline penetration holes.

According to some embodiments of the present disclosure, an accommodating groove is formed in the pipeline holder. The accommodating groove is polygonal, the pipeline fixing member is triangular, and a bottom edge of the pipeline fixing member is stuck on a side wall of the accommodating groove. Alternatively, the accommodating groove is circular, the pipeline fixing member is fan-shaped, and a bottom edge of the pipeline fixing member is stuck on the side wall of the accommodating groove.

According to some embodiments of the present disclosure, the pipeline fixing member is provided with a sub-lip at an end of the sub-pipeline penetration hole. Sub-lips on two adjacent pipeline fixing members are oppositely arranged to form a lip.

According to some embodiments of the present disclosure, a third pipeline penetration hole is formed in the lip. A radius of the second pipeline penetration hole is R1, a radius of the third pipeline penetration hole is R2, and R1 and R2 satisfy the relational expression: R1>R2.

According to some embodiments of the present disclosure, R1 and R2 satisfy the relational expression: 3 mm≤R1-R2≤5 mm.

According to some embodiments of the present disclosure, the pipeline holder includes a bottom plate and a guide tube. The guide tube is arranged on the bottom plate. The bottom plate is provided with the first pipeline penetration hole. An accommodating groove is formed in the guide tube. The multiple pipeline fixing members are arranged in the accommodating groove, and the bottom of each of the multiple pipeline fixing members abuts against the bottom plate.

According to some embodiments of the present disclosure, the first pipeline penetration hole is located in a projection region of an accommodating groove on the bottom plate. Each of the pipeline fixing members abuts against a part of the bottom plate which exceeds inward a side wall of the accommodating groove.

According to some embodiments of the present disclosure, the pipeline fixing member is a rubber block.

According to an embodiment of a second aspect of the present disclosure, the vehicle includes: a roof skin, the foregoing pipeline via hole sealing device, and the pipelines. The roof skin is provided with a fourth pipeline penetration hole. The pipeline holder is arranged on the roof skin. The first pipeline penetration hole and the fourth pipeline penetration hole are oppositely arranged. The pipelines successively penetrate the fourth pipeline penetration hole, the first pipeline penetration hole, and the second pipeline penetration hole.

According to some embodiments of the present disclosure, the vehicle further includes a sealing glue. The sealing glue is arranged on the pipeline holder and located above the multiple pipeline fixing members. The sealing glue seals space around the pipelines.

According to some embodiments of the present disclosure, the sealing glue includes a first sealing glue and a second sealing glue. The first sealing glue is arranged in the pipeline holder and located above each of the pipeline fixing members. The second sealing glue is arranged above the first sealing glue, and the top of the second sealing glue protrudes from the pipeline holder.

According to some embodiments of the present disclosure, a surface of the protruding part of the second sealing glue is an arc-shaped surface.

According to some embodiments of the present disclosure, a projection of the first pipeline penetration hole on the roof skin is located in the fourth pipeline penetration hole.

According to some embodiments of the present disclosure, the vehicle further includes a third sealing glue. The third sealing glue sticks between the pipeline holder and the roof skin.

According to some embodiments of the present disclosure, a number of the pipelines is less than a number of the second pipeline penetration hole. The vehicle further includes a blocking member. The blocking member blocks a second pipeline penetration hole not provided with a pipeline.

Other aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible from the following descriptions of the embodiments with reference to the accompanying drawings, where
FIG. 1 is a schematic structural diagram of a pipeline via hole sealing device according to an embodiment of the present disclosure;
FIG. 2 is a cross-sectional view of the pipeline via hole sealing device in FIG. 1;
FIG. 3 is an exploded view of a pipeline via hole sealing device according to an embodiment of the present disclosure; and
FIG. 4 is a schematic structural diagram of a circular accommodating groove of a pipeline holder according to an embodiment of the present disclosure.

In the drawings:
100: pipeline via hole sealing device;
10: pipeline holder; 11: bottom plate; 12: guide tube; 13: first pipeline penetration hole; 14: accommodating groove;
20: pipeline fixing member; 21: second pipeline penetration hole; 211: sub-pipeline penetration hole; 212: sub-lip; 22: third pipeline penetration hole;
30: roof skin; 31: fourth pipeline penetration hole;
40: sealing glue; 41: first sealing glue; 42: second sealing glue; 43: third sealing glue; 50: pipeline; and 51: blocking member.

### DETAILED DESCRIPTION

The embodiments of the present disclosure are described in detail below, and the embodiments described with reference to accompanying drawings are exemplary.

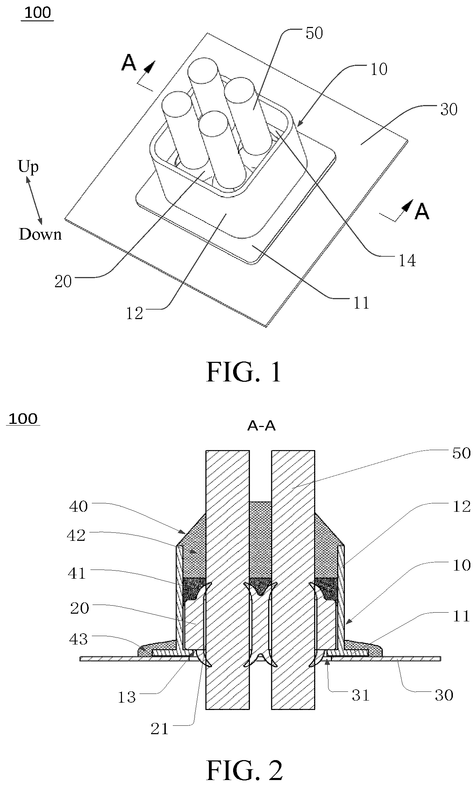

A pipeline via hole sealing device 100 according to an embodiment of the present disclosure is described below with reference to FIG. 1 to FIG. 4. The pipeline via hole sealing device 100 may be configured to fix, mount, and seal multiple pipelines 50.

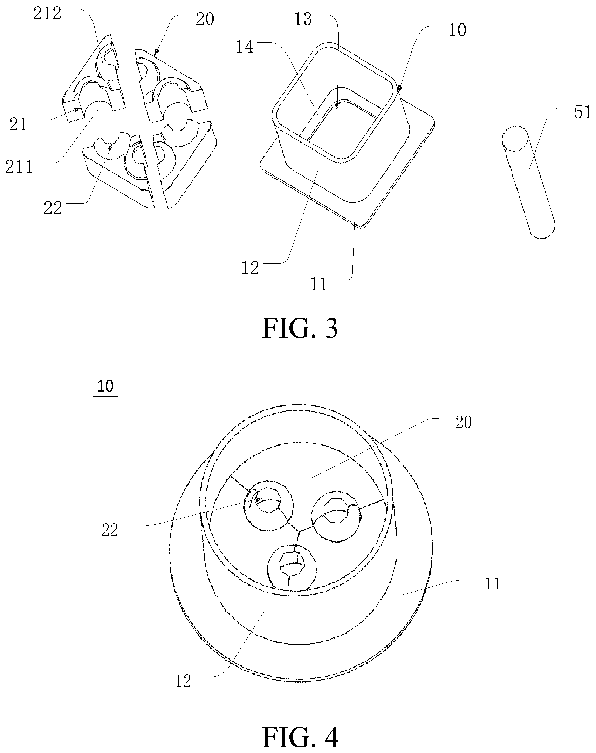

As shown in FIG. 1 and FIG. 3, according to an embodiment of a first aspect of the present disclosure, the pipeline via hole sealing device 100 includes a pipeline holder 10 and multiple pipeline fixing members 20. A bottom of the pipeline holder 10 is provided with a first pipeline penetration hole 13. The pipeline holder 10 is configured to be arranged on a supporting surface. In addition, the first pipeline penetration hole 13 is configured to be penetrated by the pipelines 50. The multiple pipeline fixing members 20 are arranged in the pipeline holder 10. The multiple second pipeline penetration holes 21 are arranged at intervals between the multiple pipeline fixing members 20. The multiple second pipeline penetration holes 21 and the first pipeline penetration hole 13 are oppositely arranged along an extension direction of the pipelines 50. The supporting surface may be a surface of a roof skin 30. Certainly, the present disclosure is not limited thereto.

Specifically, as shown in FIG. 1 and FIG. 3, the pipeline via hole sealing device 100 is mainly formed by the pipeline holder 10 and the multiple pipeline fixing members 20. The pipeline holder 10 is configured to be arranged on the supporting surface. The arranged pipeline holder 10 may play a supporting and guiding role. The pipeline holder 10 may be stuck and fixed on the supporting surface by using a sealing glue 40. The bottom of the pipeline holder 10 is provided with the first pipeline penetration hole 13. The arranged first pipeline penetration hole 13 can facilitate penetration by the pipelines 50 of a vehicle. The multiple pipeline fixing members 20 are arranged in the pipeline holder 10. The multiple pipeline fixing members 20 are made of a rubber material with certain elasticity. The multiple second pipeline penetration holes 21 arranged at intervals may be spliced and combined between the multiple pipeline fixing members 20. The second pipeline penetration hole 21 formed between the multiple pipeline fixing members 20 may tightly wrap and arrange the penetrating pipelines 50 in the pipeline holder 10, to generate an interference fit. This can eliminate a gap between the pipelines 50 and the multiple pipeline fixing members 20, and prevent the pipelines 50 from moving, thereby fixing the pipelines 50. In addition, this can prevent the pipelines 50 from being clumped, worn, and cracked, and can also improve efficiency of sealing with a glue, thereby preventing leakage from the penetration holes of the pipelines 50. The multiple second pipeline penetration holes 21 and the first pipeline penetration hole 13 are oppositely arranged along the extension direction of the pipelines 50. This can facilitate penetration by the pipelines 50 and sealing with the glue.

Therefore, the pipeline holder 10 and the multiple pipeline fixing members 20 arranged in the pipeline via hole sealing device 100 can fix the pipelines 50, can prevent the pipelines 50 from being clumped, worn, and cracked, and can also avoid poor gluing. The multiple pipeline fixing members 20 have a simple structure to be conveniently mounted and replaced. In this way, stability of sealing can be improved, efficiency of assembling is high, ineffective sealing can be avoided, and leakage from a penetration hole of a roof pipeline 50 can also be avoided.

According to some embodiments of the present disclosure, as shown in FIG. 3, one side of each of the pipeline fixing members 20 is provided with a sub-pipeline penetration hole 211. Sub-pipeline penetration holes 211 on two adjacent pipeline fixing members 20 are oppositely arranged to form the second pipeline penetration hole 21. The one side of each of the pipeline fixing members 20 is provided with the sub-pipeline penetration hole 211. The sub-pipeline penetration hole 211 may be a semi-cylindrical-shaped penetration hole. The two adjacent pipeline fixing members 20 provided with semi-cylindrical-shaped penetration holes are oppositely spliced and arranged to form the second pipeline penetration hole 21. A radius of the second pipeline penetration hole 21 is equal to a radius of the pipeline 50 for penetration, and is used for penetration by the pipeline 50, thereby facilitating fixing the pipeline 50.

According to some embodiments of the present disclosure, as shown in FIG. 3, the multiple pipeline fixing members 20 are successively arranged along a circumferential direction. Two sides of the pipeline fixing member 20 are respectively provided with the sub-pipeline penetration holes 211. The multiple pipeline fixing member 20 are successively arranged along the circumferential direction, to be combined to form an entirety. Because the two sides of the pipeline fixing members 20 are respectively provided with the sub-pipeline penetration holes 211, the multiple pipeline fixing members 20 are successively spliced along the circumferential direction to form the multiple second pipeline penetration holes 21. In this way, according to an actually required number of penetration holes used for the pipelines 50, the corresponding multiple pipeline fixing members 20 may be arranged and spliced to form the multiple second pipeline penetration hole 21 with the required number, thereby fixing the multiple pipelines 50.

According to a particular embodiment of the present disclosure, as shown in FIG. 1 and FIG. 4, an accommodating groove 14 is formed in the pipeline holder 10. The accommodating groove 14 is polygonal, the pipeline fixing member 20 is triangular, and a bottom edge of the pipeline fixing member 20 is stuck on a side wall of the accommodating groove 14. Alternatively, the accommodating groove 14 is circular, the pipeline fixing member 20 is fan-shaped, and a bottom edge of the pipeline fixing member 20 is stuck on the side wall of the accommodating groove 14. Specifically, the accommodating groove 14 is formed in the pipeline holder 10. A shape of the accommodating groove 14 may be a polygon. An entity shape formed by the combined multiple pipeline fixing members 20 is arranged correspondingly with the shape of the accommodating groove 14. A number of the pipeline fixing members 20 needs to be determined according to a number of the pipelines 50. In an example, the accommodating groove 14 formed in the pipeline holder 10 may be rectangular. When the roof skin 30 is required to be penetrated by four pipelines 50 at the same time, four pipeline fixing members 20 with a shape of triangle may be arranged and may form penetration holes for the four pipelines. When the number of pipelines 50 is small, the number of the pipeline fixing members 20 may also be two, three, or the like. Alternatively, when the accommodating groove 14 in the pipeline holder 10 is circular, the pipeline fixing members 20 may be correspondingly fan-shaped. The accommodating groove 14 formed in the pipeline holder 10 may alternatively be circular, triangular, quadrilateral, pentagonal, hexagonal, or the like. Certainly, the multiple pipeline fixing members 20 may be pipeline fixing members with the same shape, or may be pipeline fixing members with multiple different shapes. In addition, a bottom edge of the pipeline fixing member 20 is stuck on the side wall of the accommodating groove 14. The side wall of the accommodating groove 14 may be used as a supporting surface for gluing for the multiple pipeline fixing members 20. The side wall can avoid the sealing glue 40 from sagging on the pipelines 50, and can also control a gluing thickness and a gluing state.

According to some embodiments of the present disclosure, as shown in FIG. 3, the pipeline fixing member 20 is provided with a sub-lip 212 at an end of the sub-pipeline penetration hole 211. Sub-lips 212 on two adjacent pipeline fixing members 20 are oppositely arranged to form a lip. The sub-pipeline penetration hole 211 of the pipeline fixing member 20 may be a semi-cylindrical-shaped hole. Upper and lower ends of the sub-pipeline penetration hole 211 are provided with sub-lips 212. In other words, upper and lower ends of the semi-cylindrical-shaped hole are provided with the sub-lips 212. The sub-lips 212 on the two adjacent pipeline fixing members 20 are oppositely arranged to form the lip, thereby further fixing the pipeline 50.

According to some embodiments of the present disclosure, as shown in FIG. 3, a third pipeline penetration hole 22 is formed in the lip. A radius of the second pipeline penetration hole 21 is R1, a radius of the third pipeline penetration hole 22 is R2, and R1 and R2 satisfy the relational expression: R1>R2. In other words, the radius of the third pipeline penetration hole 22 is less than the radius of the second pipeline penetration hole 21. In this way, compared with a side wall of the second pipeline penetration hole 21, a side wall of the third pipeline penetration hole 22 is closer to the pipeline 50. Therefore, this can facilitate eliminating a gap between the pipeline 50 and the pipeline fixing member 20, and limiting the pipeline 50 to a certain extent.

Further, R1 and R2 satisfy the relational expression: 3 mm≤R1-R2≤5 mm. The radius of the third pipeline penetration hole 22 is 3 mm to 5 mm less than the radius of the second pipeline penetration hole 21. The third pipeline penetration hole 22 is configured to form an interference fit with the pipeline 50. This can eliminate the gap between the pipeline 50 and the pipeline fixing member 20, thereby preventing the pipeline 50 from moving.

According to some embodiments of the present disclosure, as shown in FIG. 1 and FIG. 3, the pipeline holder 10 includes a bottom plate 11 and a guide tube 12. The guide tube 12 is arranged on the bottom plate 11. The bottom plate 11 is provided with the first pipeline penetration hole 13. An accommodating groove 14 is formed in the guide tube 12. The multiple pipeline fixing members 20 are arranged in the accommodating groove 14. The bottom of each of the multiple pipeline fixing members 20 abuts against the bottom plate 11. The pipeline holder 10 is mainly formed by the bottom plate 11 and the guide tube 12. The pipeline holder 10 may be formed by welding the guide tube 12 and the bottom plate 11. The manufacturing is simple and the costs are low. The bottom plate 11 is provided with the first pipeline penetration hole 13. The multiple pipeline fixing members 20 are arranged in the accommodating groove 14. The bottom of each of the multiple pipeline fixing members 20 abuts against the bottom plate 11. When the pipelines 50 penetrate the roof skin 30 and the pipeline holder 10, the pipeline fixing members 20 encircle the pipelines 50 one by one. Then, all the pipeline fixing members 20 encircling the pipelines 50 are entirely and vertically squashed and inserted into the accommodating groove 14 of the guide tube 12. This can ensure that all the pipeline fixing members 20 come into contact with the bottom plate 11.

According to a particular embodiment of the present disclosure, as shown in FIG. 1 and FIG. 3, the first pipeline penetration hole 13 is located in a projection region of an accommodating groove 14 on the bottom plate 11. Each of the multiple pipeline fixing members 20 abuts against a part of the bottom plate 11 which exceeds inward a side wall of the accommodating groove 14. The first pipeline penetration hole 13 is a through hole, and the accommodating groove 14 of the guide tube 12 is also arranged as a through hole. A size of the first pipeline penetration hole 13 on the bottom plate 11 is 5 mm to 10 mm smaller than a size of the through hole of the guide tube 12. A surface of the bottom plate 11 exposed at the through hole of the guide tube 12 is the supporting surface for each of the pipeline fixing members 20. In this way, each of the pipeline fixing members 20 abuts against the part of the bottom plate 11 which exceeds inward the side wall of the accommodating groove 14, thereby ensuring stability of sealing of the pipeline fixing members 20.

According to some embodiments of the present disclosure, the pipeline fixing member 20 is a rubber block. The pipeline fixing member 20 is made of a rubber material with certain elasticity. Therefore, the pipeline fixing members 20 may be arranged as the rubber block.

As shown in FIG. 1, according to an embodiment of the second aspect of the present disclosure, a vehicle includes: the roof skin 30, the foregoing pipeline via hole sealing device 100 according to any one of the embodiments of the first aspect, and the pipelines 50. The roof skin 30 is provided with a fourth pipeline penetration hole 31. The pipeline holder 10 is arranged on the roof skin 30. The first pipeline penetration hole 13 and the fourth pipeline penetration hole 31 are arranged oppositely. The pipelines 50 successively penetrate the fourth pipeline penetration hole 31, the first pipeline penetration hole 13, and the second pipeline penetration hole 21. The fourth pipeline penetration hole 31 are arranged on the roof skin 30. A size of the fourth pipeline penetration hole 31 is over 2 mm larger than a size of a through hole of the bottom plate 11. This can facilitate penetration by the pipelines 50. The pipeline holder 10 should be fixedly arranged on the roof skin 30 in advance. In this way, the pipelines 50 fixed by the pipeline fixing members 20 can be conveniently put into the pipeline holder 10. In addition, the first pipeline penetration hole 13 and the fourth pipeline penetration hole 31 are arranged oppositely. In this way, the pipelines 50 penetrate from the fourth pipeline penetration hole 31 arranged on the roof skin 30, then through the first pipeline penetration hole 13, and finally to the second pipeline penetration hole 21. Therefore, this can ensure independence of the multiple pipelines 50, thereby preventing the pipelines 50 from being clumped.

According to some embodiments of the present disclosure, as shown in FIG. 2, the vehicle further includes the sealing glue 40. The sealing glue 40 is arranged on the pipeline holder 10. The sealing glue 40 is located above the multiple pipeline fixing members 20. The sealing glue 40 seals space around the pipelines 50. The sealing glue 40 can perform sealing on the multiple pipeline fixing members 20 in the pipeline holder 10. The sealing glue 40 can further seal the space around the pipelines 50 above the multiple pipeline fixing members 20. This can improve stability of sealing.

According to some embodiments of the present disclosure, as shown in FIG. 2, the sealing glue 40 includes a first sealing glue 41 and a second sealing glue 42. The first sealing glue 41 is arranged in the pipeline holder 10, and the first sealing glue 41 is located above each of the pipeline fixing members 20. The second sealing glue 42 is arranged above the first sealing glue 41, and the top of the second sealing glue 42 protrudes from the pipeline holder 10. After the pipelines 50 and the multiple pipeline fixing members 20 are mounted in the pipeline holder 10, the first sealing glue 41 is poured over the multiple pipeline fixing members 20, causing a height of the first sealing glue 41 to be completely greater than that of the pipeline fixing members 20. Then, the second sealing glue 42 is poured on the first sealing glue 41, and the top of the second sealing glue 42 protrudes from the pipeline holder 10. A gluing height of the second sealing glue 42 is required to exceed an upper surface of the guide tube 12 in the pipeline holder 10, and the second sealing glue 42 evenly and entirely wrap the pipelines 50, thereby ensuring an effect of sealing with a glue.

According to some embodiments of the present disclosure, as shown in FIG. 2, a surface of the protruding part of the second sealing glue 42 is an arc-shaped surface. The protruding part of the second sealing glue 42 after gluing is like a small hill. A dent is not allowed to exist on the top of the small hill, thereby avoiding ponding.

According to some embodiments of the present disclosure, a projection of the first pipeline penetration hole 13 on the roof skin 30 is located in the fourth pipeline penetration hole 31. A size of the fourth pipeline penetration hole 31 is a little larger than the size of the first pipeline penetration hole 13. In this way, the pipelines 50 can conveniently penetrate from the fourth pipeline penetration hole 31 of the roof skin 30.

According to some embodiments of the present disclosure, as shown in FIG. 2, the vehicle further includes a third sealing glue 43. The third sealing glue 43 sticks between the pipeline holder 10 and the roof skin 30. The pipeline holder 10 may be stuck on the roof skin 30 by using the third sealing glue 43. This can provide a supporting surface for mounting of the pipeline fixing members 20, thereby facilitating mounting and fixing the pipelines 50.

According to some embodiments of the present disclosure, a number of the pipelines 50 is less than a number of the second pipeline penetration holes 21. As shown in FIG. 3, the vehicle further includes a blocking member 51. The blocking member 51 blocks a second pipeline penetration hole 21 not provided with a pipeline 50. A diameter of the blocking member is the same as that of the pipeline 50. When a number of the penetrating pipelines 50 is three, two, or one, the number of the pipelines 50 is less than the number of the second pipeline penetration holes 21. The blocking member can be used for blocking the second pipeline penetration hole 21 penetrated by the pipeline 50, thereby improving universality of the pipeline via hole sealing device 100.

In the description of the present disclosure, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing the present disclosure and simplifying the description, rather than indicating or implying that the apparatus or element should have a particular orientation or be constructed and operated in a particular orientation, and therefore, should not be construed as a limitation on the present disclosure.

In the description of the present disclosure, "first feature" or "second feature" may comprise one or more the features. In the description of the present disclosure, "a plurality of" or "multiple" means two or more. In the description of the present disclosure, a first feature is "above" or "under" a second feature may include that the first feature comes into direct contact with the second feature, or may include that the first feature does not come into direct contact with the second feature directly but comes into contact with the second feature by means of another feature between them. In the description of the present disclosure, the first feature is "above" the second feature includes that the first feature is right above the second feature and is not right above the second feature, or merely represents that a horizontal height of the first feature is higher than the second feature.

In the description of the present disclosure, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present disclosure. In the present disclosure, schematic descriptions of the foregoing terms do not necessarily refer to the same embodiment or example.

Although the embodiments of the present disclosure have been shown and described, those of ordinary skill in the related art should understand that various changes, modifications, replacements, and variations may be made to the embodiments without departing from the principles and spirit of the present disclosure, and the scope of the present disclosure is as defined by the appended claims and their equivalents.

## Claims

1. A pipeline via hole sealing device (100), comprising:
a pipeline holder (10), a bottom of the pipeline holder (10) being provided with a first pipeline penetration hole (13), the pipeline holder (10) being configured to be arranged on a supporting surface, and the first pipeline penetration hole (13) being configured to be penetrated by pipelines (50); and
a plurality of pipeline fixing members (20), the plurality of pipeline fixing members (20) being arranged in the pipeline holder (10), a plurality of second pipeline penetration holes (21) being arranged at intervals between the plurality of pipeline fixing members (20), and the plurality of second pipeline penetration holes (21) and the first pipeline penetration hole (13) being oppositely arranged along an extension direction of the pipelines (50).

2. The pipeline via hole sealing device (100) according to claim 1, wherein one side of each of the pipeline fixing members (20) is provided with a sub-pipeline penetration hole (211), and sub-pipeline penetration holes (211) on two adjacent pipeline fixing members (20) are oppositely arranged to form the second pipeline penetration hole (21).

3. The pipeline via hole sealing device (100) according to claim 2, wherein the plurality of pipeline fixing members (20) are successively arranged along a circumferential direction, and two sides of the pipeline fixing member (20) are respectively provided with the sub-pipeline penetration holes (211).

4. The pipeline via hole sealing device (100) according to claim 3, wherein an accommodating groove (14) is formed in the pipeline holder (10), the accommodating groove (14) being polygonal, the pipeline fixing member (20) being triangular, and a bottom edge of the pipeline fixing member (20) being stuck on a side wall of the accommodating groove (14); or
the accommodating groove (14) being circular, the pipeline fixing member (20) being fan-shaped, and a bottom edge of the pipeline fixing member (20) being stuck on the side wall of the accommodating groove (14).

5. The pipeline via hole sealing device (100) according to claim 2, wherein the pipeline fixing member (20) is provided with a sub-lip (212) at an end of the sub-pipeline penetration hole (211), and sub-lips (212) on two adjacent pipeline fixing members (20) are oppositely arranged to form a lip.

6. The pipeline via hole sealing device (100) according to claim 5, wherein a third pipeline penetration hole (22) is formed in the lip, a radius of the second pipeline penetration hole (21) is R1, a radius of the third pipeline penetration hole (22) is R2, and R1 and R2 satisfy the relational expression: R1>R2.

7. The pipeline via hole sealing device (100) according to claim 6, wherein R1 and R2 satisfy the relational expression: 3 mm≤R1-R2≤5 mm.

8. The pipeline via hole sealing device (100) according to any one of claims 1 to 7, wherein the pipeline holder (10) comprises:
a bottom plate (11), provided with the first pipeline penetration hole (13); and
a guide tube (12), arranged on the bottom plate (11), an accommodating groove (14) being formed in the guide tube (12), the plurality of pipeline fixing members (20) being arranged in the accommodating groove (14), and a bottom of each of the plurality of pipeline fixing members (20) abutting against the bottom plate (11).

9. The pipeline via hole sealing device (100) according to claim 8, wherein the first pipeline penetration hole (13) is located in a projection region of the accommodating groove (14) on the bottom plate (11), and each of the pipeline fixing members (20) abuts against a part of the bottom plate (11) which exceeds inward a side wall of the accommodating groove (14).

10. The pipeline via hole sealing device (100) according to any one of claims 1 to 9, wherein the pipeline fixing member (20) is a rubber block.

11. A vehicle, comprising:
a roof skin (30), provided with a fourth pipeline penetration hole (31);
the pipeline via hole sealing device (100) according to any one of claims 1 to 10, the pipeline holder (10) being arranged on the roof skin (30), and the first pipeline penetration hole (13) and the fourth pipeline penetration hole (31) being arranged oppositely; and
pipelines (50), successively penetrating the fourth pipeline penetration hole (31), the first pipeline penetration hole (13), and the second pipeline penetration hole (21).

12. The vehicle according to claim 11, further comprising:
a sealing glue (40), the sealing glue (40) being arranged on the pipeline holder (10) and located above the plurality of pipeline fixing members (20), and the sealing glue (40) sealing space around the pipelines (50).

13. The vehicle according to claim 12, wherein the sealing glue comprises:
a first sealing glue (41), arranged in the pipeline holder (10) and located above each of the pipeline fixing members (20); and
a second sealing glue (42), arranged above the first sealing glue (41), the top of the second sealing glue (42) protruding from the pipeline holder (10).

14. The vehicle according to claim 13, wherein a surface of the protruding part of the second sealing glue (42) is an arc-shaped surface.

15. The vehicle according to any one of claims 11 to 14, wherein a projection of the first pipeline penetration hole (13) on the roof skin (30) is located in the fourth pipeline penetration hole (31).

16. The vehicle according to any one of claims 11 to 15, further comprising:
a third sealing glue (43), sticking between the pipeline holder (10) and the roof skin (30).

17. The vehicle according to any one of claims 11 to 16, wherein a number of the pipelines (50) is less than a number of the second pipeline penetration holes (21); and
the vehicle further comprises a blocking member (51), the blocking member (51) blocking a second pipeline penetration hole (21) not provided with a pipeline (50).
